Europäisches Patentamt

European Patent Office

Office européen des brevets

(19)

(11) Veröffentlichungsnummer : **0 126 232**
**B1**

(12) # EUROPÄISCHE PATENTSCHRIFT

(45) Veröffentlichungstag der Patentschrift :
30.07.86

(21) Anmeldenummer : 84102830.1

(22) Anmeldetag : 15.03.84

(51) Int. Cl.⁴ : **F 16 J 15/54**

(54) Berührungsfreie Dichtung.

(30) Priorität : 26.03.83 DE 3311121

(43) Veröffentlichungstag der Anmeldung :
28.11.84 Patentblatt 84/48

(45) Bekanntmachung des Hinweises auf die Patenterteilung : 30.07.86 Patentblatt 86/31

(84) Benannte Vertragsstaaten :
CH DE FR GB IT LI SE

(56) Entgegenhaltungen :
DE-C- 353 322
US-A- 1 558 630
US-A- 3 053 541

(73) Patentinhaber : MTU MOTOREN- UND TURBINEN-UNION MÜNCHEN GMBH
Dachauer Strasse 665 Postfach 50 06 40
D-8000 München 50 (DE)

(72) Erfinder : Zimmermann, Horst, Dipl.-Ing.
Jakob-Hagenbucher-Strasse 4
D-8000 München 50 (DE)
Erfinder : Lorenz, Joachim
Friedrich-Ebert-Strasse 14
D-8060 Dachau (DE)

Jouve, 18, rue St-Denis, 75001 Paris, France

## Beschreibung

Die Erfindung betrifft eine berührungsfreie Dichtung zwischen einem sich drehenden Teil wie Welle, einem stationären Teil wie Gehäuse, mit mindestens einer auf der Welle angeordneten Scheibe zwischen der und dem Gehäuse sich ein fluides Dichtmittel befindet und das Gehäuse in Achsrichtung der Welle eine atmosphärische Seite und eine Dichtmittelseite aufweist.

Die Abdichtung von Wellen bei geringem Überdruck in einem Gehäuse ist vielfältig gelöst worden, z. B. durch F. Wankel. Solche Dichtungen waren jedoch nicht ausreichend zuverlässig und einfach genug.

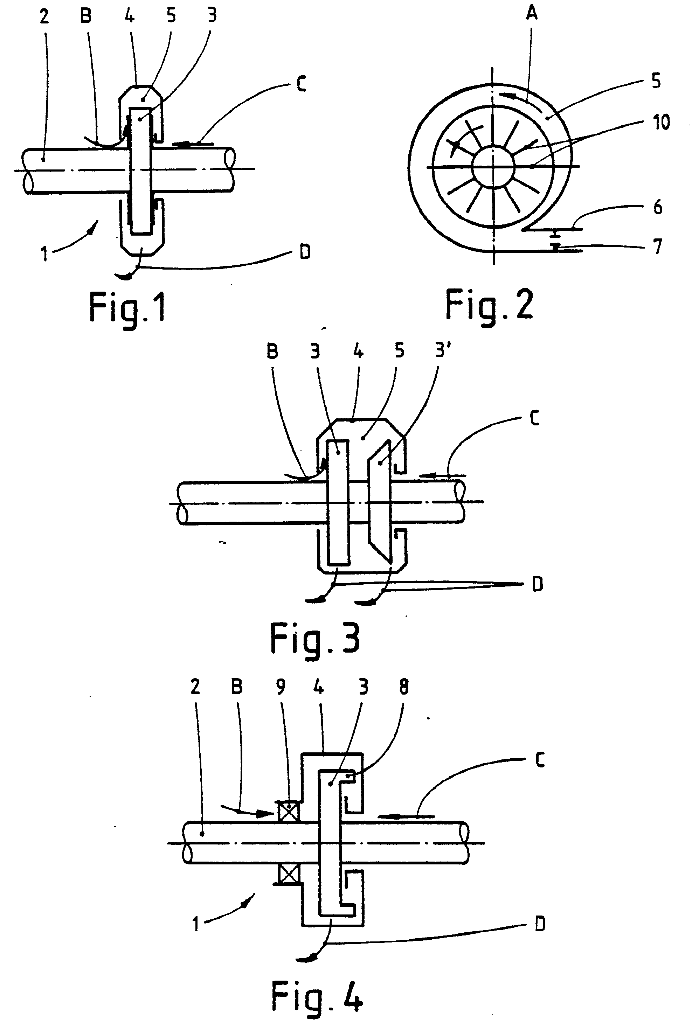

Aus der DE-C 35 33 22 ist eine Abdichtvorrichtung mit einer, durch zwei voneinander getrennte, geschlossene Räume geführten Welle bekannt, mit Ventilatoren die einen Luftstrom ansaugen sollen, wobei diese Räume durch Stopfbüchsen abgedichtet werden (Abbildung 1). Stopfbüchsen bringen Reibverluste.

Die Lösung der Patentschrift (Abbildung 2), bei der an Stelle von Luft, Öl verwendet werden soll, ist nur in vertikaler Anordnung brauchbar.

Aufgabe der Erfindung ist es, eine berührungsfreie Dichtung der eingangs genannten Art zu schaffen, die sowohl einfach als auch zuverlässig ist. Gelöst wird die der Erfindung zugrunde liegende Aufgabe dadurch, daß ein Gehäuseteil als Spiralgehäuse ausgebildet ist, sich in Drehrichtung erweitert und im Bereich seiner größten Erweiterung an eine Dichtmittelrückführleitung angeschlossen ist.

Ein wesentlicher Vorteil der Erfindung ist darin zu sehen, daß eine zuverlässige und wirksame berührungsfreie Dichtung von einfachem Aufbau geschaffen wird, die eine Dichtmittelrückführung gestattet.

Im Betrieb wird das Dichtmittel bei Drehung des Drehteils durch den engen Spalt zwischen der koaxialen Scheibe und der Fangrinne aufgrund der einwirkenden Fliehkraft radial nach außen geschleudert und im spiralförmigen Hohlraum zum einen gesammelt und aufgrund der Erweiterung des Hohlraums zum anderen zur Rückführleitung gefördert. Gleichermaßen tritt auf der Atmosphärenseite des Drehteils Luft durch den anderen engen Spalt zwischen Scheibe und Fangrinne in den spiralförmigen Hohlraum ein, so daß dort eine Dichtmittelsperre entsteht. Ersichtlich wird mit Hilfe einfacher Mittel durch die Erfindung unter Ausnützung der Fliehkraft eine zuverlässige berührungsfreie Abdichtung von Wellen oder dergleichen geschaffen.

Im spiralförmigen Hohlraum baut sich durch das rotierende Dichtmittel im Betrieb ein hoher Druck auf. Um die Rezirkulationsmenge des Dichtmittels zu begrenzen, ist in der Dichtmittelrückführleitung vorteilhafterweise ein Restriktor angeordnet.

Die Dichtmittelrückführleitung steht zwecks Rückführung des Dichtmittels zweckmäßigerweise mit der Lagerkammer des Drehteils selbst in Verbindung.

Als Dichtmittel findet ein Fluid, bevorzugt Öl oder Öl-Luftgemisch, Verwendung.

Um auch bei geringeren Umfangsgeschwindigkeiten tropfendes Dichtmittel bzw. Tropföl und eventuell auch Schwitzöl aufzufangen und ein weiteres Mal radial nach außen zu schleudern und von dort in die Rückführleitung zu befördern, sind in vorteilhafter Weiterbildung der Erfindung zwei koaxiale voneinander beabstandete Scheiben vorgesehen, die von einer gemeinsamen Fangrinne nach Art einer Labyrinthdichtung umschlossen sind.

Der Umfangsrand der Scheibe ist zweckmäßigerweise spitzwinklig ausgebildet, um ein Wegschleudern des Dichtmittels auch bei geringen Umfangsgeschwindigkeiten des Drehteils zu ermöglichen.

Vorteilhafterweise besitzt der Umfangsrand der Scheibe einen erweiterten Axialflansch-Umfangsabschnitt zwecks Ausbildung einer atmosphärenseitigen Labyrinthdichtung mit der Fangrinne, um die Sperrwirkung des Dichtmittels auf der Atmosphärenseite weiter zu verbessern, insbesondere bei niedrigen Umfangsgeschwindigkeiten des Drehteils.

Eine berührungsfreie Dichtung, die für etwas größeren Überdruck geeignet ist, sieht in Weiterbildung der Erfindung auf der Dichtmittelseite der Scheibe eine Sekundärumfangsdichtung vor, um zu verhindern, daß zuviel Dichtmittel bzw. Öl in die Hauptdichtung eindringt und nach der Rückführung zu einer starken Verwirbelung in der Lagerkammer führt. Die Sekundärumfangsdichtung ist zweckmäßigerweise ein Dichtring und/oder eine Lippenabdichtung.

Zur Verstärkung der Dichtwirkung sieht eine Weiterbildung der Erfindung vor, daß zumindest auf der Dichtmittelseite die Scheibe an ihrer Radialerweiterung Rippen oder Schaufeln besitzt.

Die Erfindung wird nachfolgend anhand von Ausführungsbeispielen unter Bezugnahme auf die Zeichnung näher erläutert ; es zeigt :

Figur 1 eine berührungsfreie Dichtung nach der Erfindung in schematischer Darstellung,

Figur 2 einen schematischen Querschnitt der Ausführungsform nach Fig. 1,

Figur 3 eine der Fig. 1 ähnliche Dichtung mit zwei koaxialen Scheiben, und

Figur 4 die Erfindung in weiterer Ausgestaltung.

In Fig. 1 ist eine berührungsfreie Dichtung 1 bei einem sich drehenden Teil 2 in Form einer Drehwelle dargestellt.

Die Drehwelle besitzt an ihrer Abdichtungsstelle einen integrierten Bund in Form einer koaxialen Scheibe 3, die durch eine Fangrinne 4 umfangsmäßig umschlossen ist. Die Fangrinne 4 ist bevorzugt ein Blechteil, das stationär am Gehäuse befestigt ist.

Die Anordnung der Fangrinne 4 ist so getroffen, daß auf der Dichtmittelseite der Drehwelle (gemäß Fig. 1 links von der Scheibe 3) sowie auf der Atmosphärenseite der Welle (gemäß Fig. 1 rechts von der Scheibe 3) jeweils ein schmaler radial sich erstreckender Umfangsspalt zwischen Fangrinne 4 und Scheibe 3 ausgebildet ist. Der radial äußere Umfangsteil der Fangrinne 4 weist Hohlzylinderform auf, wobei die Achse des Hohlzylinders bezüglich der Achse der Drehwelle versetzt ist. Mithin entsteht, wie dies der Fig. 2 zu entnehmen ist, ein spiralförmiger Hohlraum 5 zwischen dem radial äußeren Fangrinnenabschnitt und der Maximalerstreckung der Scheibe 3.

Im Bereich der größten Erweiterung des spiralförmigen Hohlraums 5 ist umfangsmäßig an den Hohlraum eine Rückführleitung 6 für das Dichtmittel angeschlossen, die zur Lagerkammer führt (vergleiche Fig. 2). In der Rückführleitung 6 befindet sich ein Restriktor 7, um die Rezirkulationsmenge des Dichtmittels zu begrenzen.

Im folgenden wird die Wirkungsweise der Dichtung beschrieben :

Dichtmittel in Form eines vorzugsweise Luft-öl-Gemisches wird auf der Dichtmittelseite der Drehwelle durch den dichtmittelseitigen Spalt der stationären Fangrinne 4 gemäß Pfeil B infolge der rotierenden Scheibe 3 aufgrund der einwirkenden Fliehkraft in den spiralförmigen Hohlraum 5 der Fangrinne 4 gesaugt bzw. durch Rotation der Scheibe radial nach außen in den Hohlraum 5 geschleudert. Gleichermaßen tritt auf der anderen Seite (Atmosphärenseite) Luft durch den dortigen Spalt in den Hohlraum 5 ein. Im spiralförmigen Hohlraum baut sich durch das rotierende Öl in Pfeilrichtung A gemäß Fig. 2 ein hoher Druck auf, so daß das Öl über die Rückführleitung 6 und durch den Restriktor 7 in die Lagerkammer der Drehwelle zurückgefördert wird. Der Restriktor sorgt für eine Begrenzung der Rezirkulationsmenge an Öl. Bei stationärer Fahrweise ist es möglich, den Restriktor so einzustellen, daß nur Öl (nicht Luft) zurückgefördert wird.

Zur Verstärkung der Dichtwirkung sind an beiden Seiten der Scheibe 3 radial sich erstreckende Rippen 10 umfangsmäßig angebracht, wie dies in Fig. 2 schematisch veranschaulicht ist.

In Fig. 3 ist eine andere Ausführungsform einer Fangrinnenabdichtung mit Rezirkulation dargestellt. Insbesondere sind auf der Drehwelle zwei voneinander beabstandete koaxial zur Drehwelle angeordnete Scheiben 3, 3′ vorgesehen, die auf der Drehwelle drehfest befestigt sind. Beide Scheiben 3, 3′ werden durch eine gemeinsame Fangrinne 4 nach Art der Ausführungsform gemäß Fig. 1 umschlossen, so daß im Betrieb dichtmittelseitig Öl-Luft-Gemisch gemäß Pfeil B und atmosphärenseitig Luft gemäß Pfeil C in den spiralförmigen Hohlraum 5 der Fangrinne 4 eintritt, und das Öl-Luft-Gemisch nach Rotation in Pfeilrichtung A am Ort der größten Erweiterung des Hohlraums 5 in die Rückführleitung 10 zurückgefördert wird, wie dies schematisch durch den Pfeil D in Fig. 3 veranschaulicht ist.

Die dichtmittelseitige erste Scheibe 3 der Drehwelle ist wie im Ausführungsbeispiel nach Fig. 1 ausgebildet. Die atmosphärenseitige weitere koaxiale Scheibe 3′ weist einen spitzwinkligen Umfangsrand auf, durch den auch bei geringeren Umfangsgeschwindigkeiten der Drehwelle Tropföl und eventuell auch Schwitzöl nochmals radial nach außen gefördert wird. Auch die dichtmittelseitige Scheibe 3 kann auf dem Umfang spitzwinklig wie die koaxiale Scheibe 3′ ausgebildet sein.

Das in Fig. 4 gezeigte Ausführungsbeispiel weist zusätzlich auf der Drehwelle eine Sekundärumfangsdichtung 9 in Form einer Gleitringdichtung auf, die der koaxialen Scheibe 3 dichtmittelseitig vorgelagert ist. Die koaxiale Scheibe 3 des Ausführungsbeispiels nach Fig. 4 besitzt einen Umfangsrand mit einem erweiterten Axialflansch-Umfangsabschnitt 8 zwecks Ausbildung einer atmosphärenseitigen Labyrinthdichtung mit der Fangrinne 4. Die Dichtung 1 nach Fig. 4 eignet sich aufgrund der Sekundärumfangsdichtung 9 für etwas größeren Überdruck, so daß verhindert wird, daß zuviel Öl in die Hauptdichtung eindringt und nach der Rückführung zu einer starken Verwirbelung in der Lagerkammer führt.

## Patentansprüche

1. Berührungsfreie Dichtung (1) zwischen einem sich drehenden Teil (2) wie Welle, einem stationären Teil (4) wie Gehäuse, mit mindestens einer auf der Welle angeordneten Scheibe (3) zwischen der und dem Gehäuse sich ein fluides Dichtmittel befindet und das Gehäuse (4) in Achsrichtung der Welle eine atmosphärische Seite (C) und eine Dichtmittelseite (B) aufweist, dadurch gekennzeichnet, daß ein Gehäuseteil (4) als Spiralgehäuse ausgebildet ist, sich in Drehrichtung erweitert und im Bereich seiner größten Erweiterung an eine Dichtmittelrückführleitung (6) angeschlossen ist.

2. Dichtung nach Anspruch 1, dadurch gekennzeichnet, daß in der Dichtmittelrückführleitung (6) ein Restriktor (7) z. B. als Blende angeordnet ist.

3. Dichtung nach Anspruch 1 oder 2, dadurch gekennzeichnet, daß die Dichtmittelrückführleitung (6) mit der Lagerkammer des sich drehenden Teils (2) in Verbindung steht.

4. Dichtung nach den Ansprüchen 1 bis 3, dadurch gekennzeichnet, daß als Dichtmittel Öl vorgesehen ist.

5. Dichtung nach den Ansprüchen 1 bis 4, dadurch gekennzeichnet, daß zwei koaxiale, voneinander beabstandete Scheiben (3, 3′) vorgesehen sind die von dem gemeinsamen fangrinnenartigen Gehäuseteil (4) umschlossen sind.

6. Dichtung nach den Ansprüchen 1 bis 5, dadurch gekennzeichnet, daß der Umfangsrand der ersten Scheibe (3) einen erweiterten Axialflansch-Umfangsabschnitt (8) zwecks Ausbildung einer atmosphärenseitigen Labyrinthdichtung mit dem fangrinnenartigen Gehäuseteil (4) besitzt.

7. Dichtung nach den Ansprüchen 1 bis 5, dadurch gekennzeichnet, daß der Umfangsrand der weiteren Scheibe (3') spitzwinklig ausgebildet ist.

8. Dichtung nach den Ansprüchen 1 bis 7, dadurch gekennzeichnet, daß auf der Dichtmittelseite der ersten Scheibe (3) eine Sekundärumfangsdichtung (9) vorgelagert ist.

9. Dichtung nach Anspruch 8, dadurch gekennzeichnet, daß die Sekundärumfangsdichtung ein Dichtring (9) und/oder eine Lippenabdichtung ist.

10. Dichtung nach Anspruch 1, dadurch gekennzeichnet, daß zumindest auf der Dichtmittelseite (B) die erste Scheibe (3) an ihrer Radialerweiterung Rippen oder Schaufeln (10) besitzt.

## Claims

1. Contact free seal (1) between a rotating part (2) such as a shaft, a stationary part (4) such as a housing with, disposed on the shaft, at least one disc (3) between which and the housing there is a fluid sealing medium, the housing (4) comprising in the axial direction of the shaft an atmospheric side (C) and a sealant side (B), characterised in that one housing part (4) is constructed as a spiral housing, widens out in the direction of rotation and is connected to a sealent return line (6) at the point at which it is most widened out.

2. Seal according to claim 1, characterised in that a restrictor (7), e. g. a diaphragm, is located in the sealant return line (6).

3. Seal according to claim 1 or 2, characterised in that the sealant return line (6) communicates with the bearing chamber of the rotating part (2).

4. Seal according to claims 1 to 3, characterised in that oil is provided as the sealant.

5. Seal according to claims 1 to 4, characterised in that two coaxial spaced-apart discs (3, 3') are provided and are enclosed by the common housing part (4) which is shaped like a gutter.

6. Seal according to claims 1 to 5, characterised in that the peripheral edge of the first discs (3) has a widened out axial flange portion (8) on its periphery for the purpose of constructing on the atmosphere side a labyrinthine seal with the gutter-shaped housing part (4).

7. Seal according to claims 1 to 5, characterised in that the peripheral edge of the other disc (3') is of acutely angled construction.

8. Seal according to claims 1 to 7, characterised in that a secondary peripheral seal (9) is mounted on the sealant side of the first disc (3).

9. Seal according to claim 8, characterised in that the secondary peripheral seal is a sealing ring (9) and/or a lipped seal.

10. Seal according to claim 1, characterised in that the first disc (3) has ribs or blades (10) on its radially widened out part, at least on the sealant side (B).

## Revendications

1. Joint d'étanchéité (1), sans contact prévu entre une partie rotative (2) telle qu'un arbre et une partie fixe (4) telle qu'un boîtier, comportant au moins un disque (3) prévu sur l'arbre, du fluide à retenir de manière étanche se trouvant entre ce disque et le boîtier, et en ce que le boîtier (4) comporte vus dans la direction axiale un côté (C) tourné vers l'atmosphère et un côté (B) tourné vers le fluide à retenir, joint caractérisé par une partie de boîtier (4) en forme de boîtier en spirale qui s'élargit dans le sens de rotation et est reliée à une conduite de retour de fluide (6) dans la zone de plus grande extension.

2. Joint selon la revendication 1, caractérisé par un organe d'étranglement (7) tel qu'un diaphragme prévu dans la conduite de retour de fluide sous pression (6).

3. Joint selon les revendications 1 ou 2, caractérisé en ce que la conduite de retour de fluide à retenir (6) est reliée à la chambre de palier de la partie rotative (2).

4. Joint selon les revendications 1 à 3, caractérisé en ce que le fluide à retenir est de l'huile.

5. Joint selon les revendications 1 à 4, caractérisé par deux disques (3, 3') coaxiaux, écartés l'un de l'autre et qui sont entourés par une partie de carter (4) commune en forme d'auge collectrice.

6. Joint d'étanchéité selon les revendications 1 à 5, caractérisé en ce que le bord périphérique du premier disque (3) comporte un segment périphérique à bride axiale (8), élargi pour former un joint en labyrinthe du côté de l'atmosphère en combinaison avec la partie de boîtier (4) en forme d'auge collectrice.

7. Joint d'étanchéité selon les revendications 1 à 5, caractérisé en ce que le bord périphérique de l'autre disque (3') est en angle aigu.

8. Joint d'étanchéité selon les revendications 1 à 7, caractérisé par un joint périphérique secondaire (9) en amont du premier disque (3) du côté du joint d'étanchéité.

9. Joint d'étanchéité selon la revendication 8, caractérisé en ce que le joint périphérique secondaire est une bague d'étanchéité (9) et/ou un joint à lèvres.

10. Joint d'étanchéité selon la revendication 1, caractérisé en ce qu'au moins du côté du fluide (B), le premier disque (3) comporte des nervures ou des ailettes (10) au niveau de son extension radiale.

Fig.1

Fig.2

Fig.3

Fig.4